# EUROPÄISCHE PATENTANMELDUNG

(11) **EP 4 338 975 A1**
(43) Veröffentlichungstag der Anmeldung: **20.03.2024**
(21) Anmeldenummer: 23198214.1
(22) Anmeldetag: 19.09.2023
(51) Int. Cl.: B60B 7/00, B60B 7/02, B60B 7/18

(54) **ABDECKUNG FÜR EIN FAHRZEUGRAD UND KOMBINATION AUS FAHRZEUGRAD UND ABDECKUNG**

(30) Priorität: 19.09.2022 DE 102022209831
(71) Anmelder: Accuride Wheels Solingen GmbH, 42697 Solingen (DE)
(72) Erfinder: George, Dominique, 42659 Solingen (DE); Heiming, Markus, 45279 Essen (DE); Polskij, Konstantin, 41564 Kaarst (DE)
(74) Vertreter: Hoffmann Eitle

(57) **Zusammenfassung**

Eine Abdeckung für ein Fahrzeugrad, insbesondere für Personenkraftwagen (PKW), weist ein ringförmiges Element auf, das eine kreisförmige Außenkante und einen inneren Kreis, der radial innerhalb der Außenkante liegt, aufweist, wobei die kreisförmige Außenkante einen Durchmesser von 35 cm bis 60 cm aufweist und der innere Kreis einen Durchmesser von 11 cm bis 40 cm aufweist, und das ringförmige Element Aussparungen aufweist, die sich ausgehend von dem inneren Kreis in radialer Richtung nach außen und in Umfangsrichtung des ringförmigen Elements erstrecken, sodass das ringförmige Element Vorsprünge aufweist, deren radial innere Enden auf dem inneren Kreis liegen.

## Beschreibung

### HINTERGRUND DER ERFINDUNG

### Technisches Gebiet

Die vorliegende Erfindung betrifft eine Abdeckung für ein Fahrzeugrad und eine Kombination aus einem Fahrzeugrad und einer Abdeckung.

### Stand der Technik

Im Stand der Technik sind Abdeckungen für Fahrzeugräder bekannt, mit denen Stahlräder (sogenannten Stahlfelgen) so bedeckt werden können, dass sie optisch den Eindruck von Leichtmetallrädern (sogenannten Aluminiumfelgen oder Alufelgen) erwecken. Eine solche Abdeckung wird auch Radkappe genannt und weist in aller Regel Aussparungen auf, sodass die Belüftungslöcher der Räder nicht gänzlich verdeckt sind. Diese Radkappen werden in das Rad eingedrückt und bedecken sowohl das Nabenloch des Rades als auch die Radbolzen.

Weiterhin gibt es Abdeckungen für Räder für Fahrzeuge, die bevorzugt bei Leichtmetallrädern zum Einsatz kommen, welche die Radbolzen und die Radnabe bedecken. Diese Abdeckungen sind in aller Regel sternförmig ausgebildet und die Anzahl der Auskragungen entspricht der Anzahl der abzudeckenden Radbolzen. Diese Abdeckungen sollen vornehmlich den Eindruck eines sogenannten Zentralmuttersystems erwecken, damit der Anschein erweckt wird, dass die Räder, wie im Motorsport üblich, nur über eine zentral auf der Radachse sitzende Mutter befestigt sind.

Beide Abdecksysteme haben den Nachteil, dass durch sie der Zugriff auf die Radbolzen versperrt ist, sodass ein höherer Wartungsaufwand durch das Abnehmen der Abdeckungen, bevor auf die Radbolzen zugegriffen werden kann, entsteht.

Vor dem Hintergrund des Standes der Technik ergibt sich somit die Aufgabe, eine Abdeckung für ein Fahrzeugrad bereitzustellen, die es ermöglicht, einfach auf die Radbolzen zugreifen zu können, während gleichzeitig eine aerodynamisch vorteilhafte Oberfläche im äußeren Bereich des Fahrzeugrades geschaffen wird, von der die Hohl- oder Zwischenräume im Übergangsbereich von der Felge zur Schüssel überspannt werden. In diesem Bereich ist der aerodynamische Einfluss durch die Rotation des Rades besonders hoch, weil hier bei gleicher Winkelgeschwindigkeit eine höhere Umfangsgeschwindigkeit als im Inneren des Rades vorliegt.

### DARSTELLUNG DER ERFINDUNG

Diese Aufgabe wird durch eine Kombination aus einem Fahrzeugrad und einer Abdeckung gemäß Anspruch 1 sowie den im Folgenden aufgeführten Abdeckungen für ein Fahrzeugrad gelöst. Vorteilhafte Ausgestaltungen der Erfindung ergeben sich aus den Unteransprüchen.

Eine Abdeckung für ein Fahrzeugrad, insbesondere für Personenkraftwagen (PKW), weist ein ringförmiges Element auf, das eine kreisförmige Außenkante und einen inneren Kreis, der radial innerhalb der Außenkante liegt, aufweist, wobei die kreisförmige Außenkante einen Durchmesser von 35 cm bis 60 cm, bevorzugt 37,5 cm bis 55 cm , besonders bevorzugt 40 cm bis 50 cm, aufweist und der innere Kreis einen Durchmesser von 11 cm bis 40 cm, bevorzugt 12 cm bis 37 cm, besonders bevorzugt 13 cm bis 34 cm aufweist, und das ringförmige Element Aussparungen aufweist, die sich ausgehend von dem inneren Kreis in radialer Richtung nach außen und in Umfangsrichtung des ringförmigen Elements erstrecken, sodass das ringförmige Element Vorsprünge aufweist, deren radial innere Enden auf dem inneren Kreis liegen.

Durch diese Abdeckung für ein Fahrzeugrad wird der Zugriff auf die Radbolzen nicht behindert, während gleichzeitig aerodynamisch nachteilige Effekte durch das sich drehende Rad auf das Fahrzeug reduziert werden.

In dem vorliegenden Zusammenhang ist der innere Kreis ein gedachter Kreis, auf dem die radial inneren Enden der Vorsprünge liegen. Der Begriff "liegen" bedeutet in diesem Zusammenhang, dass die inneren Enden entweder so ausgestaltet sind, dass sie kreisbogenförmig sind und vollständig auf diesem inneren, gedachten Kreis liegen oder, dass sie so ausgestaltet sind, dass ein Punkt oder Abschnitt ihrer Enden auf dem Kreis liegt.

Im vorliegenden Zusammenhang beschreibt der Begriff "radiale Richtung" eine Richtung des ringförmigen Elements, die orthogonal zum Umfang des ringförmigen Elements ist und durch das Zentrum des Elements läuft.

In diesem Zusammenhang beschreibt der Begriff "Umfangsrichtung" eine Richtung entlang des Umfangs des ringförmigen Elements, die sich orthogonal zu der radialen Richtung erstreckt.

Die Abdeckung kann so ausgestaltet sein, dass das ringförmige Element drei, vier, fünf, sechs oder sieben Aussparungen oder ein Vielfaches davon aufweist.

Hierbei können die inneren Enden sowohl äquidistant als auch nicht äquidistant auf dem inneren Kreis des ringförmigen Elements angeordnet sein.

Vorzugsweise weist das ringförmige Element bzw. die Abdeckung eine Außenseite und eine Innenseite auf und der Bereich zwischen der kreisförmigen Außenkante und einem weiteren Kreis, der in einer Aufsicht die Aussparungen miteinander verbindet, bildet einen Hauptkörper des ringförmigen Elements.

Der Begriff "Außenseite" beschreibt in dem vorliegenden Zusammenhang eine dem Fahrzeuggrad abgewandte Seite. Der Begriff "Innenseite" beschreibt in dem vorliegenden Zusammenhang eine dem Fahrzeugrad zugewandte Seite.

Der Hauptkörper kann von der Außenseite zu der Innenseite des ringförmigen Elements in einem radialen Querschnitt gekrümmt sein und/oder einen geradlinigen oder mehrere geradlinige Abschnitte aufweisen.

Eine solche Krümmung erhöht nicht nur die Steifigkeit des Hauptkörpers, sie ist auch aerodynamisch vorteilhaft. Durch die Erhöhung der Steifigkeit des Hauptkörpers wird die Stabilität der gesamten Abdeckung erhöht.

Die Abdeckung kann so ausgestaltet sein, dass der Krümmungsradius des Hauptkörpers von radial innen nach radial außen zunimmt.

Durch die Zunahme des Krümmungsradius von radial innen nach radial außen des Hauptkörpers kann der Hauptkörper so ausgestaltet werden, dass die Abdeckung in einem Bereich an der Außenkante im Wesentlichen orthogonal zu der Rotationsachse des Fahrzeugrades liegt.

Die Vorsprünge der Abdeckung können einen u-förmigen Querschnitt aufweisen. Unter einem "u-förmigen Querschnitt" ist in diesem Zusammenhang gemeint, dass der Querschnitt eines Vorsprungs orthogonal zu einer radialen Richtung u-förmig ist.

Der u-förmige Querschnitt kann einen Mittelsteg und Seitenstege aufweisen, die geradlinig und/oder gekrümmt sind.

Der u-förmige Querschnitt der Vorsprünge hat den Vorteil, dass die Vorsprünge sich steif ausgestalten lassen.

Dazu ist es unerheblich, ob der Mittelsteg so angeordnet ist, dass die beiden Seitenstege nach außen, also weg vom Fahrzeugrad, zeigen oder die Seitenstege am Mittelsteg so angeordnet sind, dass die Seitenstege von dem Mittelsteg ausgehend in Richtung der Innenseite der Abdeckung also zu dem Fahrzeugrad zeigen.

Die jeweiligen Stege können gradlinig sein, sodass sich ein relativ kleiner Krümmungsradius an den Übergängen von Mittelsteg zu Seitensteg einstellt. Alternativ können die Stege auch schon vorgekrümmt sein, sodass der Krümmungsradius in den Übergängen von dem Mittelsteg zu den Seitenstegen größer ist.

Der u-förmige Querschnitt kann einen Mittelsteg und Seitenstege aufweisen, die jeweils den gleichen Krümmungsradius aufweisen.

Die Stege können dadurch so ausgestaltet sein, dass sich ein kreisförmiger Querschnitt ergibt, der sich über einen Winkelbereich von mindestens 60° öffnet.

Die Enden der Vorsprünge können zur Innenseite des ringförmigen Elements abfallen. Die Vorsprünge sind folglich von dem Hauptkörper aus nach Innen also zum Fahrzeugrad hin gekrümmt.

Bevorzugt sind Seitenstege, insbesondere die Seitenstege im Falle eines u-förmigen Querschnitts, so ausgebildet, dass sie von dem Abdeckungshauptkörper zum Ende der Vorsprünge kleiner werden. Hierdurch wird es möglich, dass sich die Abdeckung so in die Speichenelemente des Fahrzeugrades integriert.

Die kreisförmige Außenkante und mindestens ein radial äußerer Teil des Hauptkörpers können aus einem flexiblen Material ausgebildet sein.

Durch das Ausbilden der kreisförmigen Außenkante und mindestens einem radial äußeren Teil des Hauptkörpers aus einem flexiblen Material ist es möglich, die Abdeckung über das Felgenhorn hinaus auszugestalten, sodass die gesamte Felge und ein Teil des Reifens vor mechanischen Belastungen, zum Beispiel durch das Berühren von Bordsteinen beim Einparken, geschützt werden.

Die Abdeckung kann so ausgebildet sein, dass sie mehrere innere Kreise aufweist, die jeweils konzentrisch mit der kreisförmige Außenkante sind, und jeder der inneren Kreise einen Durchmesser von 11 cm bis 40 cm, bevorzugt 12 cm bis 37 cm, besonders bevorzugt 13 cm bis 34 cm aufweist, sodass auf jedem inneren Kreis mindestens ein radial inneres Ende von mindestens einem der Vorsprünge liegt.

Hierdurch können die Vorsprünge unterschiedlich lang ausgebildet werden, sodass ihre Enden z.B. auf einer Spirale angeordnet sind.

Eine erfindungsgemäße Kombination weist ein Fahrzeugrad, insbesondere für Personenkraftwagen (PKW), und eine der vorgenannten Abdeckungen für ein Fahrzeugrad auf.

Hierbei weist das Fahrzeugrad speichenförmige Elemente auf und die Vorsprünge der Abdeckung sind so ausgebildet, dass sie in axialer Richtung in die speichenförmigen Elemente hineinragen. In jedes speichenförmige Element ragt höchstens ein Vorsprung hinein und jeder Vorsprung ist zur Innenseite der Abdeckung in einem radialen Querschnitt gekrümmt, sodass ein Punkt auf dem Vorsprung, der radial weiter innen als ein zweiter Punkt auf dem Vorsprung liegt, axial weiter innen als der zweite Punkt liegt.

Die axiale Richtung ist die Richtung der Rotationsachse des Fahrzeugrades. Ein Punkt ist "axial weiter innen" wenn er in Richtung der Rotationsachse weiter innen liegt und damit näher an der Fahrzeugmitte als ein Vergleichspunkt.

"Hineinragen" bedeutet in dem Zusammenhang, dass ein Vorsprung in einem speichenförmigen Element liegt. Hierzu muss das speichenförmige Element nicht vollständig ausgefüllt werden.

Bevorzugt umfasst die Kombination ein Fahrzeugrad, das speichenförmige Elemente aufweist, und die Vorsprünge der Abdeckung können so ausgebildet sein, dass sie in die speichenförmigen Elemente hineinragen. Eine solche Ausgestaltung hat den Effekt, dass Verwirbelungen durch die Speichenelemente reduziert werden können. Hierdurch wird die aerodynamische Effizienz der Kombination weiter verbessert.

Bevorzugt ist die Kombination so ausgebildet, dass sich die Abdeckung radial über ein Felgenhorn der Felge hinaus erstreckt.

Weiter bevorzugt ist bei der Kombination aus Fahrzeugrad und Abdeckung die Anzahl der speichenförmigen Elemente und die Anzahl der Vorsprünge gleich.

Weiterhin müssen die Vorsprünge in den vorgenannten Kombinationen und Abdeckungen nicht notwendigerweise nur u-förmig sein, sondern können zum Beispiel einen Schlitz in radialer Richtung entlang eines Mittelstegs oder aller Mittelstege aufweisen.

### KURZE BESCHREIBUNG DER FIGUREN

Figur 1 ist eine perspektivische Ansicht einer Abdeckung für ein Fahrzeugrad, die zu Illustrationszwecken auf einer Felge montiert ist.
Figur 2 ist eine perspektivische Teilansicht der Abdeckung aus Figur 1.
Figur 3 zeigt eine weitere Ausführungsform einer Abdeckung für ein Fahrzeugrad, die zu Illustrationszwecken auf einer Felge montiert ist.
Figur 4 zeigt eine weitere Ausführungsform einer Abdeckung für ein Fahrzeugrad, die zu Illustrationszwecken auf einer Felge montiert ist.
Figur 5 zeigt eine weitere Ausführungsform einer Abdeckung für ein Fahrzeugrad, die zu Illustrationszwecken auf einer Felge montiert ist.
Figur 6 zeigt eine weitere Ausführungsform einer Abdeckung für ein Fahrzeugrad, die zu Illustrationszwecken auf einer Felge montiert ist.

### WEGE ZUM AUSFÜHREN DER ERFINDUNG

Im Folgenden werden verschiedene Ausführungsformen einer Abdeckung für ein Fahrzeugrad entsprechend der vorliegenden Erfindung mit Bezug zu den begleitenden Figuren beschrieben. Auch die Kombination aus Fahrzeugrad mit einer Abdeckung für ein Fahrzeugrad entsprechend der vorliegenden Erfindung wird mit Bezug zu den begleitenden Figuren beschrieben. Gleiche Elemente oder Merkmale der erfindungsgemäßen Abdeckung sind mit gleichen Bezugszeichen versehen und eine wiederholte Beschreibung dieser Abdeckung und Merkmale wird ausgelassen. Stattdessen wird auf die Beschreibung der vorhergehenden Figuren verwiesen.

Die Ausführungsformen weisen Fahrzeugräder mit fünf speichenförmigen Elementen auf, die sich von innen radial nach außen erstrecken. Die folgenden Ausführungsformen können jedoch beliebige andere Anzahlen von Vorsprüngen und speichenförmigen Elementen aufweisen. Die speichenförmigen Elemente weisen einen Speichenmittelsteg und zwei Speichenseitenstege auf, die sich jeweils von dem Speichenmittelsteg erstrecken. Der Speichenmittelsteg ist in axialer Richtung weiter innen als die Speichenseitenstege angeordnet, sodass die Speichen eine Vertiefung aufweisen. Diese Vertiefung wird durch einen Vorsprung der Abdeckung so gefüllt oder ausgefüllt, dass Verwirbelungen reduziert werden.

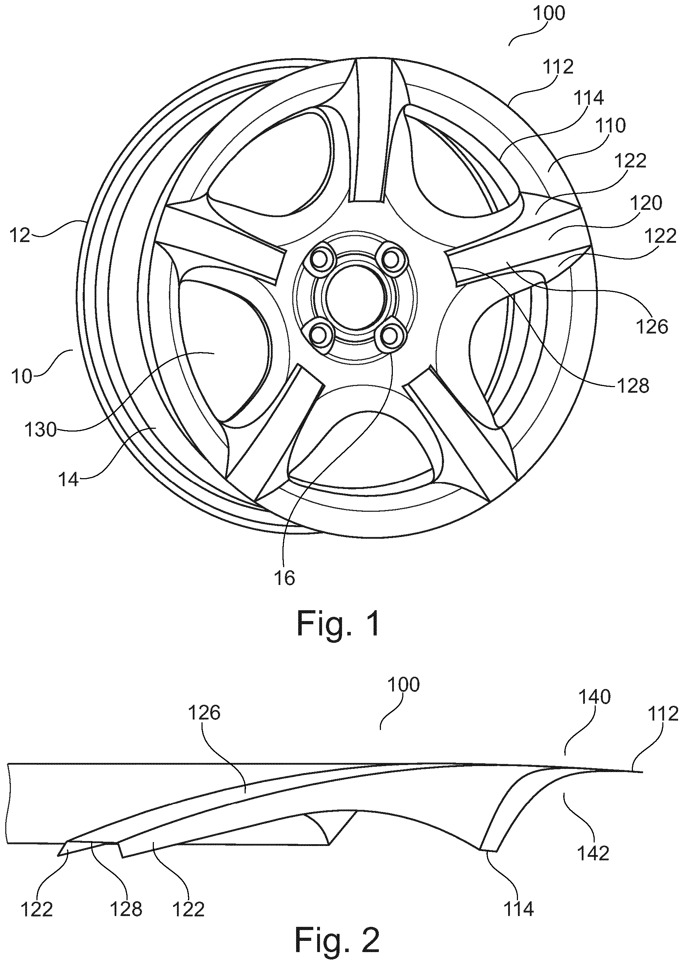

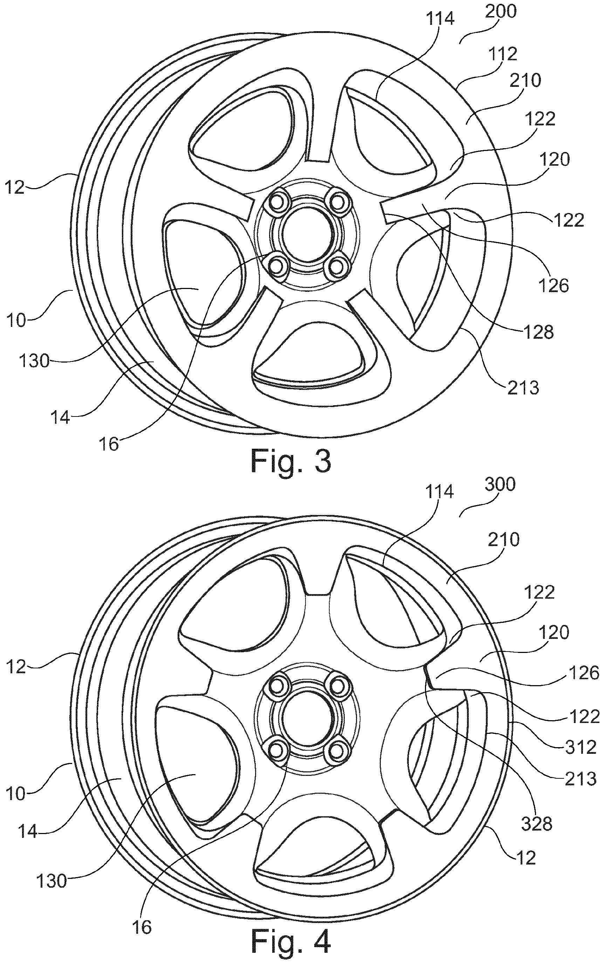

Fig. 1 zeigt eine Abdeckung 100 mit einer kreisförmigen Außenkante 112, Aussparungen 130 und Vorsprüngen 120, die auf einem Fahrzeugrad 10 montiert ist. Das Fahrzeugrad weist eine Felge 14 und eine Schüssel 16 im inneren der Felge 14 auf. Die Felge 14 weist ein Felgenhorn 12 auf, dass von der Abdeckung 100 bedeckt ist. Das Felgenhorn 12 ist in Fig. 4 sichtbar.

Die Vorsprünge 120 stehen von einem Hauptkörper 110 des ringförmigen Elements radial nach innen hervor. Die Enden 128 der Vorsprünge 120 sind auf einem gedachten Kreis, der sich radial innerhalb der kreisförmigen Außenkante 112 befindet, und mit der Außenkannte 112 konzentrisch angeordnet ist.

Die kreisförmige Außenkante 112 erstreckt sich über das Felgenhorn der dargestellten Felge, sodass eine Felge vollständig durch die Abdeckung 100 in dem Bereich geschützt wird, der einer erhöhten Gefahr beim Ein- und/oder Ausparken ausgesetzt ist. Bevorzugt ist die kreisförmige Außenkante aus einem weichen Material ausgebildet, sodass sie den Bewegungen des nicht dargestellten Reifens in einem gewissen Maße folgen kann.

Die Vorsprünge 120 weisen einen u-förmigen Querschnitt auf, wie in Fig. 2 dargestellt, wobei der Vorsprung einen Mittelsteg 126 und Seitenstege 122 aufweist. Die Abdeckung weist eine Außenseite 140 und eine Innenseite 142 auf und die Seitenstege 122 erstrecken sich ausgehend von dem Mittelsteg 126 zur Innenseite 142. Die Außenseite 140 ist die dem Fahrzeugrad abgewandte Seite und die Innenseite 142 ist die dem Fahrzeugrad zugewandte Seite der Abdeckung im montierten Zustand. Der Mittelsteg 126 und damit der Vorsprung 120 fällt zur Innenseite 142 ab. Die Vorsprünge sind folglich von dem Hauptkörper aus nach innen also zum Fahrzeugrad hin gekrümmt. Der Vorsprung fällt kontinuierlich ab, dass heißt, dass ein Punkt auf dem Mittelsteg, der radial weiter innen als ein zweiter Punkt auf dem Mittelsteg liegt, axial weiter innen als der zweite Punkt liegt.

Der Hauptkörper 110 des ringförmigen Elements ist gekrümmt, sodass der Bereich, der an die Innenkante 114 angrenzt, radial innerhalb der kreisförmigen Außenkante 112 liegt, sich in Richtung einer Rotationsachse des Fahrzeugrades und zur Innenseite 142 der Abdeckung krümmt, wohingegen der Bereich des Hauptkörpers 110 des ringförmigen Elements, der die Außenkante 112 angrenzt, sich nahezu orthogonal zu der Rotationsachse des Fahrzeugrades erstreckt.

Fig. 3 zeigt eine andere Ausführungsform der Abdeckung 200. Die Abdeckung ist auf einer Felge montiert. Der Hauptkörper 210 des ringförmigen Elements ist anders als in der vorherigen Ausführungsform ausgestaltet.

Der Hauptkörper weist ähnlich wie in der vorherigen Ausführungsform eine kreisförmige Außenkante 112 auf, die sich über ein Felgenhorn erstreckt. Auch der Bereich des Hauptkörpers 210 des ringförmigen Elements in der Nähe der kreisförmigen Außenkante 112 erstreckt sich, wie in der vorhergehenden Ausführungsform, über das Felgenhorn der dargestellten Felge.

Die vorliegende Ausführungsform unterscheidet sich jedoch dahingehend von der vorherigen Ausführungsform, dass der Hauptkörper einen Knickkante 213 (Knickbereich oder Kantenbereich) aufweist, in dem der radial äußeren Bereich des Hauptkörpers 210 des ringförmigen Elements zu dem radial inneren Bereich des Hauptkörpers 210 an den Aussparungen 130 abgewinkelt ist.

Hierdurch ist ähnlich wie in der vorhergehenden Ausführungsform der Hauptkörper 210 des ringförmigen Elements so ausgestaltet, dass er sich nach innen erstreckt. Dadurch ist der Bereich des Hauptkörpers 210 des ringförmigen Elements in dem Bereich der Aussparungen 130 relativ zu der Rotationsachse des Fahrzeugrades geneigt, wohingegen der äußere Bereich des Hauptkörpers 210 des ringförmigen Elements, der an die kreisförmige Außenkante 112 angrenzt, senkrecht zur Rotationsachse des Fahrzeugrades ist.

Fig. 4 zeigt eine weitere Ausführungsform der Abdeckung für ein Fahrzeugrad, die auf einer Felge montiert ist. Die kreisförmige Außenkante 312 des Hauptkörpers des ringförmigen Elements liegt innerhalb des Felgenhorns. Auch ist im Vergleich zu den vorhergehenden Ausführungsformen der Vorsprung 120 so ausgestaltet, dass die radial inneren Enden 328 der Vorsprünge 120 nicht so weit wie in den vorhergehenden Ausführungsformen zum Zentrum des Fahrzeugrades ragen. Im Vergleich zu den vorhergehenden Ausführungsformen weist der innere Kreis einen größeren Durchmesser auf.

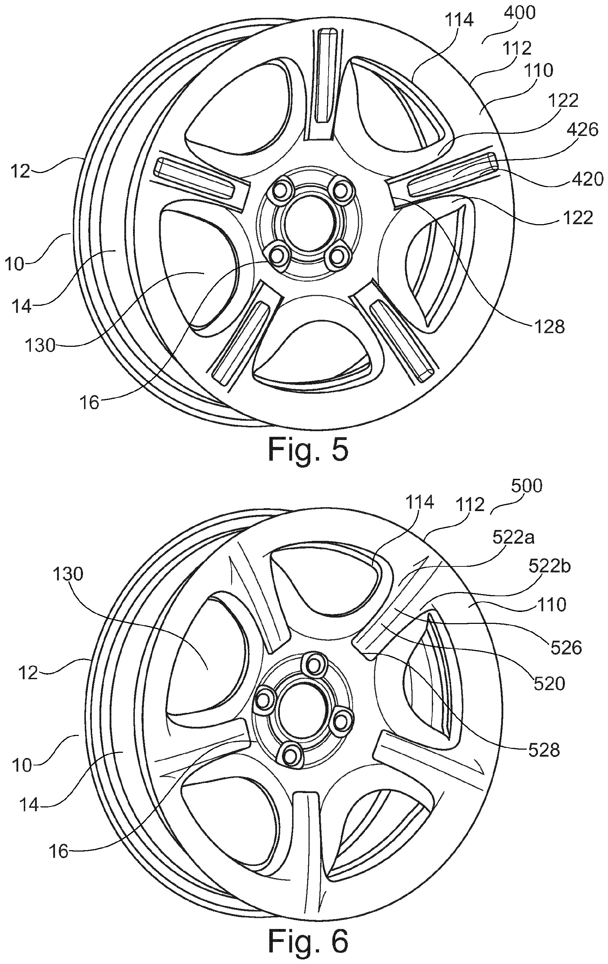

Fig. 5 zeigt eine weitere Ausführungsform der Abdeckung 400. Im Vergleich zu den vorherigen Ausführungsformen sind die Vorsprünge 420 so ausgebildet, dass sie in ihrem Mittelsteg 426 eine Vertiefung aufweisen, die zur Innenseite 142 in einer Aufsicht vertieft ist. Durch diese Vertiefung in dem Mittelsteg 426 kann die Steifigkeit der Vorsprünge 420 weiter erhöht werden.

Fig. 6 zeigt eine weitere Ausführungsform 500 der Abdeckung. Im Vergleich zu den vorhergehenden Ausführungsformen weisen die Vorsprünge 520 ein asymmetrisches Profil im Querschnitt senkrecht zu einer radialen Richtung auf, wobei der Mittelsteg 526 außermittig in den Vorsprüngen 520 angeordnet ist und die Seitenstege 522a und 522b jeweils unterschiedlich ausgebildet sind.

Der Seitensteg 522a ist im Vergleich zum Seitensteg 522b deutlich stärker zu dem Mittelsteg 526 hin abgeknickt. Der Seitensteg 522b ist weniger stark zu dem Mittelsteg 526 abgeknickt, sodass er länger ist, um sich genauso weit zur Innenseite 142 zu erstrecken wie der Seitensteg 522a. Hierdurch ergibt sich ein aerodynamisch vorteilhaftes Profil, da insbesondere bei größeren Umfängen der Bereiche nahe der Innenkante 114 aerodynamisch besonders vorteilhaft ist, da so ein flacher Anstieg des Steinstegs 522b ermöglicht wird.

Sämtliche Abdeckungen für ein Fahrzeuggrad 100, 200, 300, 400 und 500 können zum Beispiel über einen Klemmring an der Felge befestigt werden. Alternative Befestigungsmöglichkeiten sind zum Beispiel durch das Einlassen von Magneten in die Abdeckung möglich.

Die Abdeckung kann aus Kunststoff (insbesondere Thermoplast / Duroplast / Elastomer) oder aus Metall, insbesondere Aluminium, hergestellt werden. Die Abdeckung kann auch aus einer Kombination verschiedener Materialien ausgebildet sein.

In allen Ausführungsformen ragen die Vorsprünge 120, 420, 520 in das speichenförmige Element hinein, sodass sie dem speichenförmigen Element liegen. Weiterhin ist in jedem speichenförmigen Element genau ein Vorsprung 120, 420, 520 angeordnet.

### Merkmalsliste

10 Fahrzeugrad, 12 Felgenhorn, 14 Felge, 16 Schüssel
100, 200, 300, 400, 500 Abdeckung für ein Fahrzeugrad
110, 210 Hauptkörper des ringförmigen Elements
112, 312 kreisförmige Außenkante
114 Innenkante
120, 420, 520 Vorsprung
122, 522a, 522b Seitensteg
126, 426, 526 Mittelsteg
128, 328, 528 radial innere Enden
130 Aussparungen
140 Außenseite
142 Innenseite
213 Knickkante

## Patentansprüche

1. Kombination aus einem Fahrzeugrad und einer Abdeckung für das Fahrzeugrad, wobei die Abdeckung aufweist:
eine Außenseite und eine Innenseite;
ein ringförmiges Element, das eine kreisförmige Außenkante und einen inneren Kreis, der radial innerhalb der Außenkante liegt, aufweist,
wobei die kreisförmige Außenkante einen Durchmesser von 35 cm bis 60 cm und der innere Kreis einen Durchmesser von 11 cm bis 40 cm aufweist, und
das ringförmige Element Aussparungen aufweist, die sich ausgehend von dem inneren Kreis in radialer Richtung nach außen und in Umfangsrichtung des ringförmigen Elements erstrecken, sodass das ringförmige Element Vorsprünge aufweist, deren radial innere Enden auf dem inneren Kreis liegen, wobei das Fahrzeugrad speichenförmige Elemente aufweist und die Vorsprünge der Abdeckung so ausgebildet sind, dass sie in axialer Richtung in die speichenförmigen Elemente hineinragen,
**dadurch gekennzeichnet, dass**
in jedes speichenförmige Element höchstens ein Vorsprung hineinragt und
jeder Vorsprung zur Innenseite der Abdeckung in einem radialen Querschnitt gekrümmt ist, sodass ein Punkt auf dem Vorsprung, der radial weiter innen als ein zweiter Punkt auf dem Vorsprung liegt, axial weiter innen als der zweite Punkt liegt.

2. Kombination nach Anspruch 1, wobei die Abdeckung so ausgebildet ist, dass sie radial über ein Felgenhorn der Felge hinausragt.

3. Kombination nach Anspruch 1 oder 2, wobei die Anzahl der speichenförmigen Elemente und die Anzahl der Vorsprünge gleich ist.

4. Kombination nach einem der vorherigen Ansprüche, wobei das ringförmige Element drei, vier, fünf, sechs oder sieben Aussparungen oder ein Vielfaches davon aufweist.

5. Kombination nach einem der vorherigen Ansprüche, wobei der Bereich zwischen der kreisförmigen Außenkante und einem weiteren Kreis, der in einer Aufsicht die Aussparungen miteinander verbindet, einen Hauptkörper des ringförmigen Elements bildet.

6. Kombination nach Anspruch 5, wobei der Hauptkörper von der Außenseite zu der Innenseite des ringförmigen Elements in einem radialen Querschnitt gekrümmt ist und/oder einen geradlinigen oder mehrere geradlinige Abschnitte aufweist.

7. Kombination nach Anspruch 6 wobei der Krümmungsradius des Hauptkörpers von radial innen nach radial außen zunimmt oder der Hauptkörper einen radial inneren und einen radial äußeren Bereich aufweist, die zueinander abgewinkelt sind.

8. Kombination nach einem der vorhergehenden Ansprüche, wobei die Vorsprünge einen u-förmigen Querschnitt aufweisen, optional, wobei der u-förmige Querschnitt einen Mittelsteg und Seitenstege aufweist, die geradlinig und/oder gekrümmt sind.

9. Kombination nach Anspruch 8, wobei der u-förmige Querschnitt einen Mittelsteg und Seitenstege aufweist, die den gleichen Krümmungsradius aufweisen.

10. Kombination nach einem der Ansprüche 5 bis 9, wobei die Enden der Vorsprünge zur Innenseite des ringförmigen Elements abfallen.

11. Kombination nach einem der vorherigen Ansprüche, wobei die Abdeckung aus Kunststoff ausgebildet ist und/oder entfernbar an dem Fahrzeugrad angebracht ist.

12. Kombination nach einem der vorherigen Ansprüche, wobei die kreisförmige Außenkante und mindestens ein radial äußerer Teil des Hauptkörpers aus einem flexiblen Material ausgebildet ist und/oder
wobei die radial inneren Enden und mindestens ein an die inneren Enden angrenzender Teil der Vorsprünge aus einem flexiblen Material ausgebildet sind.

13. Kombination nach einem der vorherigen Ansprüche, wobei die Abdeckung mehrere innere Kreise aufweist, die jeweils konzentrisch mit der kreisförmigen Außenkante sind, und jeder der inneren Kreise einen Durchmesser von 11 cm bis 40 cm aufweist, sodass auf jedem inneren Kreis mindestens ein radial inneres Ende von mindestens einem der Vorsprünge liegt.

14. Kombination nach einem der vorherigen Ansprüche, wobei die speichenförmigen Elemente Vertiefungen in axialer Richtung zur Radinnenseite aufweisen und die Vorsprünge der Abdeckung in diesen Vertiefungen liegen und/oder in diese hineinragen.

15. Kombination nach Anspruch 14, wobei die speichenförmigen Elemente einen u-förmigen Querschnitt mit einem Speichenmittelsteg und zwei Speichenseitenstegen aufweisen, die sich vom Speichenmittelsteg axial zur Radaußenseite erstrecken, optional wobei die Speichenseitenstege im Querschnitt gekrümmt sind, und die Vorsprünge der Abdeckung in der durch die Speichenseitenstege und den Speichenmittelsteg gebildeten Vertiefung liegen und/oder in diese hineinragen.
